# EUROPEAN PATENT APPLICATION

(11) **EP 4 691 676 A1**
(43) Date of publication of application: **11.02.2026**
(21) Application number: 24218865.4
(22) Date of filing: 10.12.2024
(51) Int. Cl.: B23D 57/00, B28D 1/06, B28D 7/04

(54) **ULTRA-LARGE NUMERICAL CONTROL PRECISION HIGH-SPEED WIRE CUTTING MACHINE**

(30) Priority: 06.08.2024 CN 202411072252; 06.08.2024 CN 202421890242 U
(71) Applicant: Changsha Yunwei Technology Co., Ltd, Changsha City Hunan 410600 (CN); Kings-Wing Stone (Xiamen) Co., Ltd, Xiamen City Fujian 361016 (CN)
(72) Inventor: Hou, Yu, Changsha City, 410600 (CN); Tong, Mingxing, Changsha City, 410600 (CN); Liu, Yong, Changsha City, 410600 (CN)
(74) Representative: Franke, Dirk

(57) **Abstract**

The present invention relates to an ultra-large numerical control precision high-speed wire cutting machine and belongs to the technical field of mechanical cutting. The wire cutting machine includes a basic pre-embedded assembly, a peripheral frame, a swing system and a wire cutting system; wherein the swing system includes a swing rack, a swing beam, a swing motor, a swing transmission shaft, a crank and a linear sliding rail; the swing rack swings relative to the basic pre-embedded assembly. The system of the present invention has a simple structure, works with high processing efficiency and processing precision, occupies a small space, and can solve the problem of high cutting loss.

## Description

### Priority applications

This application claims priority of Chinese application No. 202411072252.5, filed on August 6, 2024, and the priority of Chinese application No. 2024218902428, filed on August 6, 2024.

### Field of the Invention

The present invention relates to a technical field of mechanical cutting, and more particularly to an ultra-large numerical control precision high-speed wire cutting machine, and more particularly to a high-efficiency machining apparatus for slicing and formation of large workpieces.

### Background

At present, there are two major slicing methods of raw stones in the market: according to the first method, a frame saw is used to process several slices of stones by means of reciprocating motion of several groups of saw blades; according to the second method, wire saws are used to grind the stones, i.e., several thick strings coated with diamond ring particles are used, which run in circulation to achieve an objective of cutting. The main disadvantages of the two methods are high cutting loss, low processing efficiency and high cost of consumables. In addition, the thickness of the processed slices is certain, it is rather difficult to change size, the space occupied is large, and the maintenance of the apparatus is difficult.

### Summary

In view of the above-mentioned deficiencies in the prior art, the present invention provides an ultra-large numerical control precision high-speed wire cutting machine, which has high processing accuracy and efficiency, occupies a small space, can solve the problem of high cutting loss, is suitable for the slicing process of various sizes of stones in the market, and is also suitable for the high-efficiency slicing and formation of the ultra-large workpieces.

In order to achieve the above object, the present invention provides the following solution:
an ultra-large numerical control precision high-speed wire cutting machine, wherein the wire cutting machine includes a basic pre-embedded assembly, a peripheral frame, a swing system and a wire cutting system;
the peripheral frame is mounted on the basic pre-embedded assembly;
the swing system comprises a swing rack, a swing beam, a swing motor, a swing transmission shaft, a crank and a linear sliding rail; wherein the swing rack is mounted on the basic pre-embedded assembly via a swing base, in the peripheral frame, the swing base has a hinge shaft therein, and the swing rack swings relative to the basic pre-embedded assembly via the hinge shaft; the swing motor is mounted on the peripheral frame outside one end of the swing rack, and an output shaft of the swing motor is connected to one end of the crank via the swing transmission shaft; the swing beam is mounted at one end of the top of the swing frame; the linear sliding rail is mounted inside the swing beam; the other end of the crank is slidably connected to the linear sliding rail via a sliding block; the wire cutting system is mounted on the swing rack; the swing motor drives the crank to rotate via the swing transmission shaft, the sliding block reciprocates along the linear sliding rail, the overall swing rack swings via the linear sliding rail, and the wire cutting system swings together with the swing rack.

Further, the swing rack is an inner rack of the frame structure; the swing base comprises swing lower bases and first support bases; in the peripheral frame, the two swing lower bases are symmetrically fixed on the basic pre-embedded assembly; the first support bases are symmetrically mounted on two sides of the middle of the bottom of the inner rack; a center of the first support base is connected to the swing lower base via the hinge shaft, and the swing frame can swing relative to the swing lower base via the hinge shaft.

Further, the swing beam comprises a fixing portion and an extension; the swing beam is mounted on the top of one side of the inner rack via the fixing portion, and the extension portion extends to the outside of the inner rack; and the linear sliding rail is mounted inside the extension portion.

Further, the swing system further comprises a speed reducer; the output shaft of the swing motor is connected to the speed reducer, and an output end of the speed reducer is connected to the crank via the swing transmission shaft.

Further, the swing base comprises swing fixing lower bases, a swing hinge bearing and a swing hinge shaft; the swing rack comprises two groups of swing frames, and the swing beam is fixed on the top of the swing frames;
in the peripheral frame, the two swing fixing bases are fixed on the basic pre-embedded assembly, in parallel with an interval therebetween, and a vertical plate is provided at a center part above the swing fixing bases; a bottom end of the swing frame is buckled on the vertical plate and is connected with the vertical plate via the swing hinge shaft, and the swing hinge bearing is sleeved on the swing hinge shaft.

Further, the swing motor is fixed on the peripheral frame in the middle of the extension portion of two swing beams; the output shaft of the swing motor is connected to the speed reducer, the output end of the speed reducer is connected to the center of the swing transmission shaft, and two ends of the swing transmission shaft are respectively connected to the crank via a coupling.

Further, there are swing guide friction plates respectively mounted at two ends out of the swing beam; and the swing guide friction plates are connected to a guide limiting plate mounted inside the peripheral frame.

Further, the wire cutting machine further comprises a lifting platform system; the lifting platform system is located inside the peripheral frame and used for lifting raw material; the lifting platform system comprises a lifting bracket, a lifting transmission shaft, a lifting screw base, a lifting driving geared motor, lifting screws and a material platform;
two groups of the lifting brackets are symmetrically provided on the basic pre-embedded assembly on two sides of the material platform; the two lifting screws are symmetrically provided at ends of the lifting bracket on a side close to the material platform, a top end of the lifting screw passes through the top of the lifting bracket and is placed in the lifting screw base, which is fixed at the top of the lifting bracket, and the bottom end of the lifting screw is connected to the material platform; the lifting driving geared motor is mounted on the peripheral frame, in the middle of the top of the lifting bracket, and the output end of the lifting driving geared motor is connected to the middle of the lifting transmission shaft; the two ends of the lifting transmission shaft are respectively placed in the lifting screw base and are connected to the lifting screw by means of turbine-worm transmission; the lifting driving geared motor drives the lifting screw to lift via the lifting transmission shaft, and the lifting screw carries the material to lift via the material platform.

Further, the basic pre-embedded assembly comprises loading and unloading tracks and a loading and unloading trolley, wherein the two loading and unloading tracks are mounted in parallel in the middle above the basic pre-embedded assembly, and the loading and unloading trolley travels along the loading and unloading tracks for loading and unloading material for the material platform.

Further, the wire cutting system comprises a rewinding and unwinding mechanism and roller assemblies;
four groups of the roller assemblies wherein two are respectively mounted at the left and right ends at the top of the inside part of the swing rack, the other two are respectively mounted at the left and right ends at the bottom of the inside part of the swing rack, and the mounting direction of the rollers of the roller assembly is parallel to the swing transmission shaft;
the rewinding and unwinding mechanism is provided on a side of the swing rack opposite to the swing motor; the rewinding and unwinding mechanism comprises a rewinding and unwinding wheel, a rewinding and unwinding base and a rewinding and unwinding motor; the rewinding and unwinding base is mounted on the swing rack, the rewinding and unwinding motor is mounted on one side of the rewinding and unwinding base, and an output shaft of the rewinding and unwinding motor passes through the rewinding and unwinding base and is connected to the rewinding and unwinding wheel; one end of the cutting wire is successively wound on the rollers of the four roller assemblies, and at least the cutting wires at the upper and lower ends of the roller assemblies are parallel for cutting the material; the other end of the cutting wire is wound on the rewinding and unwinding wheel, and the rewinding and unwinding wheel, driven by the rewinding and unwinding motor, winds and unwinds the cutting wire and cuts the material.

### Technical effects:

In the ultra-large numerical control precision high-speed wire cutting machine of the present invention, a wire cutting system is mounted on a swing system, and a swing action is added during the cutting process, thereby increasing the cutting amplitude and greatly improving the cutting efficiency and cutting strength. A sliding block and crank mechanism is used for the swing system of the present invention to achieve a swing action during continuous movement of the swing motor, which is beneficial to further improve the processing efficiency, reduce the cutting loss, reduce the cost of consumables, and maintain the stability of cutting, and avoid the problem of shortening the service life caused by frequent shutdown and reversing of the swing motor, and at the same time, the swing system is simple in structure and convenient in maintenance.

The swing system and the lifting platform system in the ultra-large numerical control precision high-speed wire cutting machine of the present invention are respectively mounted in the peripheral frame, and the material to be cut is placed on the material platform of the lifting platform system, which greatly reduces the floor space taken up by the wire cutting machine.

The swing system of the present invention can be used in either a closed or non-closed configuration to facilitate cutting of materials of different sizes, to increase the range of use of the wire cutting machine, and to meet the requirements for efficient slicing of the ultra-large workpieces.

The wire cutting system of the present invention facilitates adjustment of the position of the cutting wire via a wiring adjustment mechanism and a tension mechanism to meet the slicing requirements of different sizes of the workpieces.

The present invention also provides a water-cooling system which can reduce temperature of slag flushing of the wire mesh, materials and the like during the cutting process to avoid the influence of cut slags and high temperature on the cutting.

In addition, the lifting platform system of the present invention can simultaneously lift four corners of a material platform, which can satisfy the lifting of ultra-large materials and can also ensure the stability of the lifting of materials.

### Brief Description of Drawings

FIG. 1 is a schematic structural diagram showing an ultra-large numerical control precision high-speed wire cutting machine according to the present invention;
FIG. 2 is a schematic diagram showing an ultra-large numerical control precision high-speed wire cutting machine without outer guard according to the present invention;
FIG. 3 is a schematic structural diagram showing a basic pre-embedded assembly according to the present invention;
FIG. 4 is a schematic structural diagram showing a lifting platform system according to the present invention;
FIG. 5 is a schematic structural diagram showing a swing system according to Embodiment 1 of the present invention;
FIG. 6 is an enlarged partial view of a sliding block and crank mechanism of FIG. 5;
FIG. 7 is a schematic structural diagram showing a wire cutting system according to the present invention;
FIG. 8 is a schematic structural diagram showing a water-cooling system according to the present invention;
FIG. 9 is a schematic structural diagram showing a swing system according to an optional implementation manner of the present invention; and
FIG. 10 is an enlarged structural diagram showing a wire cutting system 5 according to the present invention.
FIG. 11 is an enlarged structural diagram showing part of elements of the swing system 4 according to embodiment of the present invention.
FIG. 12 is a structural diagram showing part of elements of the swing system 4 viewed from the other side.

Reference numerals: 1-basic pre-embedded assembly, 1.1-reinforced concrete base, 1.2-apparatus pre-embedded mounting board, 1.3-collecting and draining ditch, 1.4-loading and unloading track, 1.5-loading and unloading trolley, 2-peripheral frame, 3-lifting platform system, 3.1-lifting stand column, 3.2-lifting cross beam, 3.3-material, 3.4- lifting transmission shaft, 3.5-lifting screw base, 3.6- driving geared motor for lifting, 3.7-lifting screw, 3.8-platform lifting base, 3.9-material platform, 3. 10-baffle, 4-swing system, 4.1-swing lower base, 4.2-first support base, 4.3-inner rack, 4.4-swing beam, 4.5-swing motor, 4.6-speed reducer, 4.7-swing transmission shaft, 4.8-second support base, 4.9-crank, 4.10-linear sliding rail, 4.11-swing fixing lower base, 4.12-swing shaft end plate, 4.13-swing hinge base, 4.14-swing lower cross beam, 4.15-swing hinge bearing, 4.16-swing hinge shaft, 4.17-swing stand column, 4.18-swing middle cross beam, 4.19-swing driving cross beam, 4.19-swing guide friction plate, 4.20-crank rotation shaft base, 4.21-coupling, 5-wire cutting system, 5.1-wiring adjustment sliding block group, 5.2-wiring adjustment guide wheel, 5.3-winding displacement linear module, 5.4-winding displacement motor, 5.5-winding displacement deviation correction mechanism, 5.6-winding displacement guide wheel, 5.7-rewinding and unwinding wheel, 5.8-rewinding and unwinding base, 5.9-rewinding and unwinding motor, 5.10-tension motor, 5.11-tension guide wheel, 5.12-tension torsion arm, 5.13-tension motor seat, 5.14-cutting wire, 5.15-roller, 5.16-roller driven shaft box, 5.17-roller driving shaft box, 5.18-roller motor, 6-operating platform, 7-outer guard, 8-water-cooling system, 8.1-water pump, 8.2-water delivery pipeline, 8.3-water tank, 8.4-connecting pipe, 8.5-water collection pipe, 8.6-water outlet pipeline, 8.7-pipeline and joint.

### Detailed Description of Embodiments

The following detailed description of the embodiments of the present invention is provided in combination with the drawings and examples. The following examples are intended to illustrate the present invention, but are not intended to limit the scope of the present invention.

In the present document, terms of orientation or positional relationship such as up, down, left, right, inside, outside, front, rear, head, and tail are established based on the orientation or positional relationship shown in the drawings. With the figures being different, the corresponding positional relationship may also be changed, so the protection scope should not be construed as being limited thereby.

In the present invention, the terms "mount", "connect", "connect to", "fix" and the like are to be understood broadly, and it might have been for example, a fixed connection, a detachable connection, an integrated connection, a mechanical connection, an electrical connection or mutual communication, a direct connection, an indirect connection through an intermediate medium, a communication between two components, or an interaction relationship between two components. The specific meaning of the above terms in the present invention can be understood by a person skilled in the art according to specific circumstances.

### Embodiment

This example describes an ultra-large numerical control precision high-speed wire cutting machine, which is applicable to the slicing process of various sizes of stones in the market, and is also applicable to the high-efficiency slicing and formation of the large workpieces.

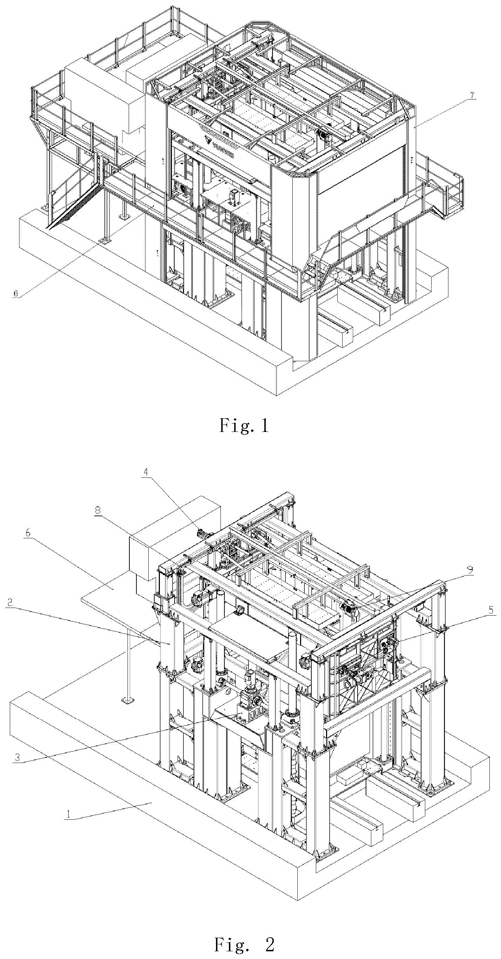

As shown in FIGS. 1 and 2, the wire cutting machine of the present embodiment includes a basic pre-embedded assembly 1, a peripheral frame 2, a lifting platform system 3, a swing system 4, a wire cutting system 5, an operating platform 6, an outer guard 7, a water-cooling system 8, and an oil mist (grease) lubrication system.

The peripheral frame 2 is mounted on the basic pre-embedded assembly 1, the lifting platform system 3, the swing system 4, the water-cooling system 8 and the oil mist (grease) lubrication system are respectively mounted on the peripheral frame 2, and the lifting platform system 3 is used for lifting materials to be cut; the wire cutting system 5 is mounted on the swing system 4, and the swing system 4 drives the wire cutting system 5 to swing; the wire cutting system 5 is used for cutting the materials, and the water-cooling system 8 is used to reduce the temperature during cutting and wash away the cut slags, and the oil mist (grease) lubrication system is used for the lubrication of various connection parts of the wire cutting machine. The operating platform 6 is circumferentially provided outside the peripheral frame 2, an operator can stand on the operating platform 6 for operation or maintenance, and the outer guard 7 is wrapped outside of the peripheral frame 2 for waterproof protection and safe shielding of the whole machine.

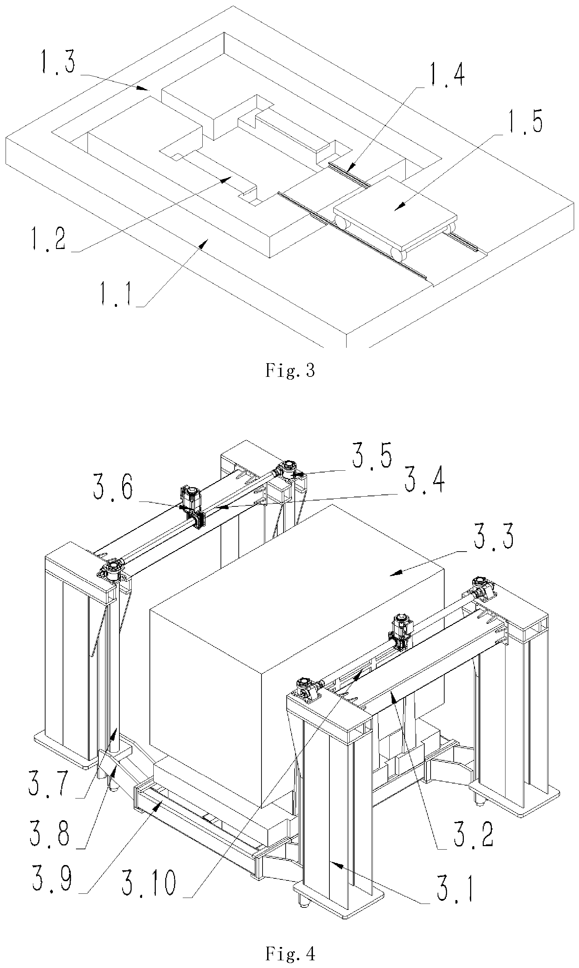

The basic pre-embedded assembly 1 of the present embodiment is a foundation support base of the wire cutting machine, and as shown in FIG. 3, the basic pre-embedded assembly 1 comprises a reinforced concrete base 1.1, an apparatus pre-embedded mounting board 1.2, a collecting and draining ditch 1.3 (for collecting and draining the liquid which are sprayed out during cooling), a loading and unloading track 1.4 and a loading and unloading trolley 1.5. The apparatus pre-embedded mounting board 1.2 is designed according to the mounting requirements of the bottom of the peripheral frame 2, and is stabilized on the work site by means of the reinforced concrete base 1.1 for carrying the wire cutting machine. The collecting and draining ditch 1.3 is circumferentially provided in the apparatus pre-embedded mounting board 1.2 to realize the functions of collecting and draining the cutting liquid. Two loading and unloading tracks 1.4 are mounted in parallel, in the middle part above one side of the apparatus pre-embedded mounting board 1.2, and the loading and unloading trolley 1.5 travels along the loading and unloading track 1.4 for carrying materials to be cut into and out of the material platform 3.9.

The peripheral stand columns of the peripheral frame 2 are fixed on the apparatus pre-embedded mounting board 1.2, and play a main bearing function of the peripheral frame 2. An outer guard 7 (shown in fig. 1) is wrapped outside the peripheral frame 2, and the outer guard 7 comprises a structure such as a sheet metal part, a connector, a curtain and an enclosure.

As shown in FIG. 4, the lifting platform system 3 of the present embodiment comprises a lifting stand column 3.1, a lifting cross beam 3.2, a lifting transmission shaft 3.4, a lifting screw base 3.5, a lifting driving geared motor 3.6, a lifting screw 3.7, a platform lifting seat 3.8, a material platform 3.9, and a baffle 3.10, used for lifting material 3.3 to be cut.

A lifting bracket is symmetrically mounted on two sides of the loading and unloading track 1.4 on the apparatus pre-embedded mounting board 1.2, the lifting bracket is a door frame structure composed of two lifting stand columns 3.1 and a lifting cross beam 3.2, the two lifting stand columns 3.1 are respectively fixed on the apparatus pre-embedded mounting board 1.2 in the peripheral frame 2, and the top of the side walls of the two lifting stand columns 3.1 are connected via the lifting cross beam 3.2. Between the two groups of lifting brackets, two ends of the material platform 3.9 are respectively connected to a bottom end of the lifting screw 3.7 (i.e., at the opposite side of the two groups of lifting brackets) via the platform lifting seats 3.8,, and the top end of the lifting screw 3.7 passes through the top of the lifting stand column 3.1 and is placed in the lifting screw base 3.5. The two ends of the lifting transmission shaft 3.4 are respectively placed in the lifting screw base 3.5 of the lifting bracket and are drivingly connected to the turbine worm of the lifting screw 3.7, so as to drive the lifting screw 3.7 to rotate. The lifting driving geared motor 3.6 is mounted in the middle of the lifting cross beam 3.2, and the output end of the lifting driving geared motor 3.6 is connected to the middle of the lifting transmission shaft 3.4 for providing lifting power. The material 3.3 is placed on the material platform 3.9, and the lifting driving geared motor 3.6 drives lifting transmission shaft 3.4, lifting transmission shaft 3.4 drive the lifting screw 3.7 to lift and then the lifting screw 3.7 supports the material 3.3 to be lifted via the material platform 3.9. A plurality of receptacles are provided in sequence on the mate'rial platform 3.9 from the center to two sides , and two baffles 3.10 are respectively plugged into the corresponding receptacles according to the width of the material 3.3, thereby preventing operation faults such as hitting wires and clamping wires caused by an edge skin of the material 3.3 falling off.

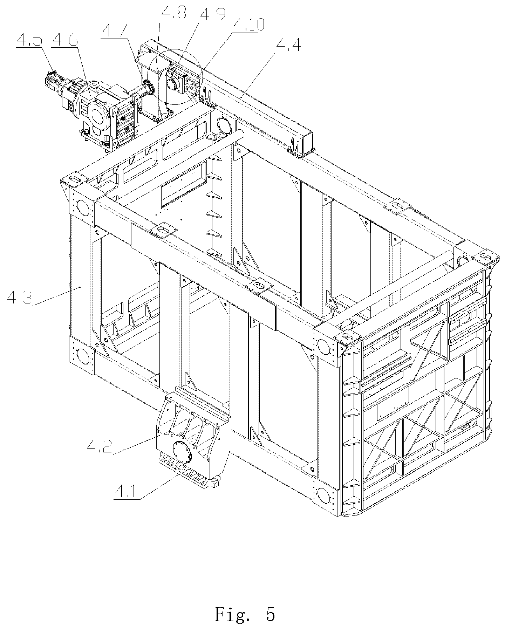

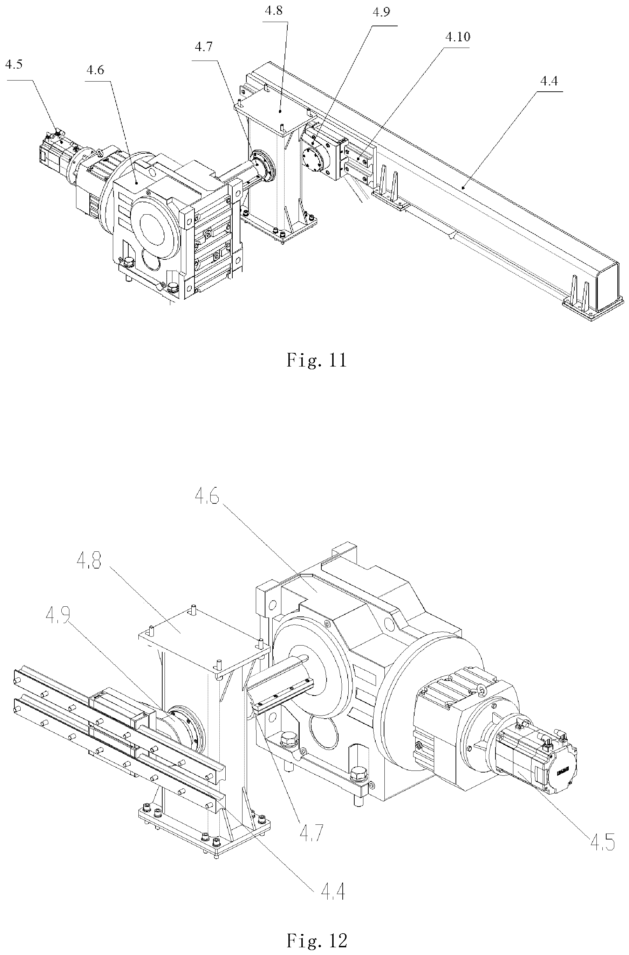

As shown in FIGS. 5, 6, 11 and 12, the swing system 4 comprises a swing lower base 4.1, first support bases 4.2, an inner rack 4.3, a swing beam(s) 4.4, a swing motor 4.5, a speed reducer (geared reducer or gearbox) 4.6, a swing transmission shaft 4.7, a second support bases 4.8, a crank 4.9, a linear sliding rail 4.10, etc.

The inner rack 4.3 adopts a frame structure, and the first support bases 4.2 are symmetrically mounted at two sides of the middle part of the bottom of the inner rack 4.3, wherein the first support bases 4.2 are placed on the swing lower base 4.1, and the center of the first support bases 4.2 are connected to the swing lower base 4.1 via hinge shafts respectively, and each of the first support base 4.2 can swing relative to the corresponding swing lower base 4.1 around the center hinge shaft, and then the inner rack 4.3 can swing relative to the basic pre-embedded assembly 1 (i.e., an mounting site). The swing lower base 4.1 is fixed on the peripheral frame 2 and is used for supporting the swing system 4 to ensure the stability of the swing system 4 during the movement of swing.

The swing beam 4.4 is a beam for transmitting swing power, and is composed of a fixing portion and an extension portion, wherein the fixing portion is mounted on the top of one side of the inner rack 4.3 via a support rack, and the extension portion extends to the outside of the inner rack 4.3. One or two linear sliding rails 4.10 are fixed inside the extension portion of the swing beam 4.4.

At the end of the inner rack 4.3 where the swing beam 4.4 is mounted, the outer swing motor 4.5 and the second support base 4.8 are respectively mounted on the top frame cross beam of the peripheral frame 2; the swing motor 4.5 is a swing power source, and can adopt a precision servo motor; the output shaft of the swing motor 4.5 is connected to the speed reducer 4.6; the output shaft of the speed reducer 4.6 is connected to one end of the crank 4.9 via the swing transmission shaft 4.7; and the other end of the crank 4.9 is rotatably connected to the sliding block on the linear sliding rail 4.10, i.e., the crank 4.9 can rotate relative to the sliding block, the structure of crank 4.9 of the present embodiment includes, but is not limited to, an elongated structure with rounded ends at both ends, and the sliding block slides back and forth along the linear slide block 4.10 as the crank 4.9 rotates. The second support base 4.8 is sleeved on the swing transmission shaft 4.7, and plays a supporting role for the swing transmission shaft 4.7.

The wire cutting system 5 is mounted on the inner rack 4.3. When the swing system 4 works, the swing motor 4.5 drives the crank 4.9 to rotate via the speed reducer 4.6 and the swing transmission shaft 4.7, and drives the sliding block to move along the linear sliding rail 4.10, and at the same time drives the first support base 4.2 to swing relative to the swing lower base 4.1, so that the sliding block reciprocates along the linear sliding rail 4.10, and the linear sliding rail 4.10 drives the inner rack 4.3 to swing back and forth as a whole via the swing beam 4.4, and then the wire cutting system 5 swings together with the inner rack 4.3.

The wire cutting system 5 of the present embodiment comprises a wiring adjustment mechanism, a rewinding and unwinding mechanism, a tension mechanism and a cutting roller. One part of the cutting wire 5.14 forms a wire mesh by wrapping aroud the cutting rollers for cutting the material 3.3, and the other part of the cutting wire 5.14 passes through the wiring adjustment mechanism, the tension mechanism, the rewinding and unwinding mechanism successively, and the cutting wire 5.14 is rewound and unwound by the rewinding and unwinding mechanism.

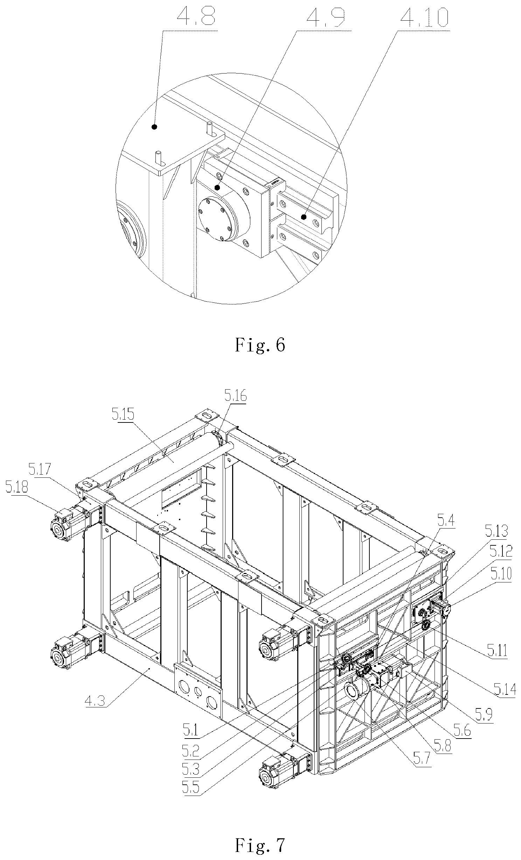

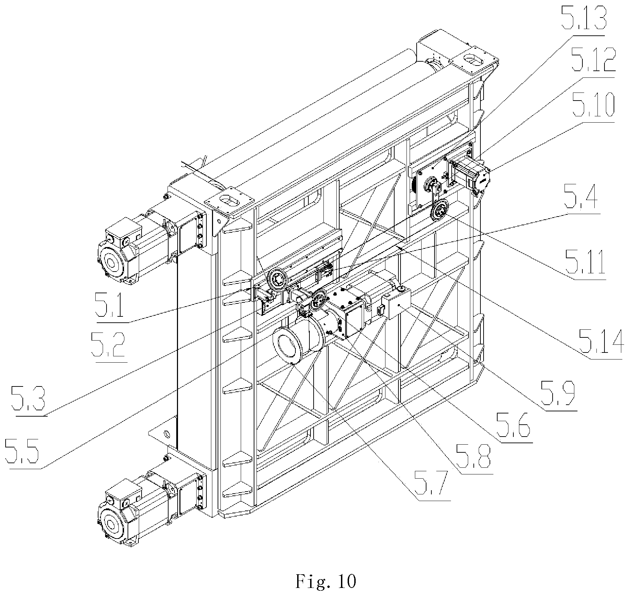

Specifically, as shown in FIG. 7 and Fig. 10, the wire cutting system 5 comprises a wiring adjustment sliding block group 5.1, a wiring adjustment guide wheel 5.2, a winding displacement linear module 5.3, a winding displacement motor 5.4, a winding displacement deviation correction mechanism 5.5, a winding displacement guide wheel 5.6, a rewinding and unwinding wheel 5.7, a rewinding and unwinding base 5.8, a rewinding and unwinding motor 5.9, a tension motor 5.10, a tension guide wheel 5.11, a tension torsion arm 5.12, a tension motor seat 5.13, a cutting wire 5.14, rollers 5.15, a roller driven shaft box 5.16, a roller driving shaft box 5.17, and a roller motor 5.18.

At the second end of the inner rack 4.3, which is opposite to first end of inner rack 4.3 that mounting the swing motor 4.5, the wiring adjustment sliding block group 5.1 and the tension motor seat 5.13 are respectively mounted at two sides of the second end of the inner rack 4.3. The wiring adjustment guide wheel 5.2 is mounted on the wiring adjustment sliding block group 5.1 to constitute a wiring adjustment mechanism for the cutting wire 5.14; by adjusting the position of the wiring adjustment guide wheel 5.2, the cutting wire 5.14 can be adjusted to the outermost cutting position of the material 3.3, preventing an idle cutting, and also facilitating the adjustment and arrangement of the baffle 3.10.

The tension motor 5.10 is mounted on the tension motor seat 5.13, and the output shaft of the tension motor 5.10 is connected to the tension guide wheel 5.11 via the tension torsion arm 5.12 to constitute a tension mechanism, wherein there is a tension sensor in the tension mechanism monitors the tension and feeds back the tension of the cutting wire 5.14 to the tension motor 5.10, and drives the tension guide wheel 5.11 via the tension motor 5.10 to move and adjust the tension of the cutting wire 5.14 to maintain the predetermined tension of the cutting wire 5.14. At the same time, the tension guide wheel 5.11 is also used to control the steering of the cutting wire 5.14. In addition, the height of the top of the tension guide wheel 5.11 is consistent with the height of the bottom end of the wiring adjustment guide wheel 5.2, so that the cutting wire 5.14 between the wiring adjustment guide wheel 5.2 and the tension guide wheel 5.11 is in a horizontal state.

The winding displacement linear module 5.3 is mounted on the inner rack 4.3 below the wiring adjustment mechanism, the winding displacement deviation correction mechanism 5.5 and the winding displacement guide wheel 5.6 are respectively mounted on the winding displacement linear module 5.3, the winding displacement motor 5.4 is mounted on the inner rack 4.3 at one end of the winding displacement linear module 5.3, and the winding displacement motor 5.4 drives the winding displacement deviation correction mechanism 5.5 and the winding displacement guide wheel 5.6 to move linearly along the winding displacement linear module 5.3. The height of the top of the winding displacement guide wheel 5.6 is consistent with the height of the bottom end of the tension guide wheel 5.11, so that the cutting wire 5.14 between the tension guide wheel 5.11 and the winding displacement guide wheel 5.6 is horizontal. The front end of the winding displacement deviation correction mechanism 5.5 has two guide wheels, and the cutting wire 5.14 passes between the two guide wheels for guiding the inclined cutting wire 5.14 to linearly extend to the rewinding and unwinding wheel 5.7 below to achieve the winding displacement function of neatly rewinding and unwinding of the cutting wire 5.14.

The rewinding and unwinding base 5.8 is mounted on the inner rack 4.3 below the winding displacement linear module 5.3. The rewinding and unwinding motor 5.9 is mounted on the inner side of the rewinding and unwinding base 5.8, the output shaft of the rewinding and unwinding motor 5.9 passes through the rewinding and unwinding base 5.8 and is connected to the rewinding and unwinding wheel 5.7 which is located below the winding displacement deviation correction mechanism 5.5 and driven by the rewinding and unwinding motor 5.9 to rotate (wrap) the rewinding and unwinding cutting wire 5.14. In the present embodiment, the cutting wire 5.14 with a linear velocity during retraction is used to rub the material 3.3 to realize a cutting function.

In the inner rack 4.3, rollers 5.15 are respectively provided at the left and right ends, up and down,wherin two are provided at left (one up, one down), the other two are provided at right(one up, one down), and the rollers 5.15 are parallel to the swing transmission shaft 4.7; the two ends of the rollers 5.15 are respectively mounted on the inner rack 4.3 via a roller driven shaft box 5.16 and a roller driving shaft box 5.17, roller driven shaft box 5.16 and a roller driving shaft box 5.17 provide support for the rollers 5.15 with a large length dimension, and ensure the strength, rigidity and accuracy of the rollers 5.15. The roller motor 5.18 is mounted on the roller driving shaft box 5.17, the output shaft of the roller motor 5.18 is connected to the roller 5.15 passing through the roller driving shaft box 5.17, and the roller motor 5.18 provides torque to the roller 5.15. The rollers 5.15 of the present embodiment have cylindrical shape, V-shaped wire grooves are uniformly distributed on the surface of the cylinder according to the spacing required by the cutting sheet thickness of the material 3.3, and the cutting wires 5.14 on the cutting sides (i.e., the top end of the upper roller 5.15 and the bottom end of the lower roller 5.15, the cutting wires 5.14 between lower roller 5.15, and the cutting wires 5.14 between upper roller 5.15 are used for cutting materials) are parallel to the material platform 3.9 on the four rollers 5.15, and the cutting wires 5.14 on the remaining sides (i.e., the cutting wires 5.14 between left lower roller 5.15 and left upper roller, and the cutting wires 5.14 between right lower roller 5.15 and right upper roller 5.15) are spirally wound on the rollers 5.15 to achieve the wire mesh arrangement of the cutting wires 5.14. In the present embodiment, with the friction between the cutting wire 5.14 and the roller 5.15 cooperating with the rewinding and unwinding mechanism, the cutting wire 5.14 is promoted to operate a rewinding and unwinding action and the material 3.3 is rubbed since there is linear velocity generated during the rewinding and unwinding process of the cutting wire 5.14 to realize the cutting function, and the cutting amplitude and cutting strength are increased through the swing action during the cutting process, which is beneficial to improve the cutting efficiency.

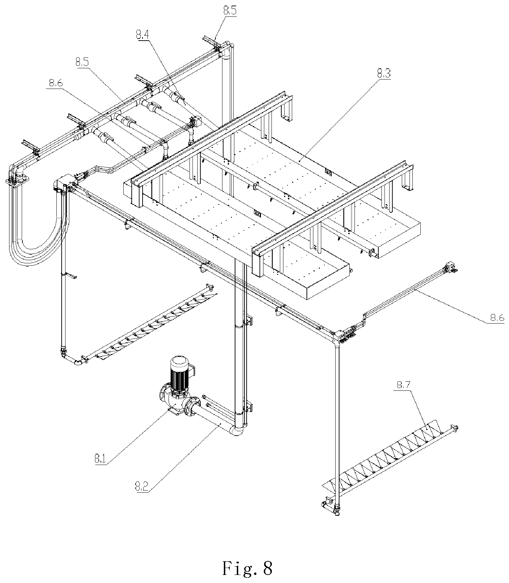

A water-cooling system 8 is mounted on the peripheral frame 2 above the wire cutting system 5. The water-cooling system 8 includes a spray assembly and a water-cooling assembly. As shown in FIG. 8, the spray assembly comprises a water pump 8.1, a water delivery pipeline 8.2, a water tank 8.3, a connecting pipe 8.4, a water collection pipe 8.5 and a water outlet pipeline 8.6. Two water tanks 8.3 provided at intervals are mounted on top of the peripheral frame 2 by brackets, respectively. The water pump 8.1 is mounted on the lower part of the peripheral frame 2, and an output port of the water pump 8.1 is connected to two water tanks 8.3 via a water delivery pipeline 8.2 to deliver water to the water inlet tank 8.3. One end of the water tank 8.3 is respectively connected to the water collection pipe 8.5 via a plurality of connecting pipes 8.4, the water collection pipe 8.5 is successively connected to two water outlet pipelines 8.6 via pipelines, the water outlet pipelines 8.6 are respectively fixed on the peripheral frame 2 perpendicular to the direction of the upper two rollers 5.15, and a plurality of spray ports are uniformly distributed on the water outlet pipelines 8.6, and when cutting, the wire mesh and the material 3.3 are sprayed to achieve an objective of cooling and flushing away the cut slags. The water-cooling assembly comprises a cooling machine, a pipeline and a joint 8.7, etc.; the cooling machine is fixed on the peripheral frame 2; the inlet and outlet of the cooling machine are connected to the pipeline and the joint 8.7; the four cooling pipelines of the pipeline and the joint 8.7 are respectively located near the four rollers 5.15; and the roller driven shaft box 5.16 and the roller driving shaft box 5.17 are cooled by circulating water-cooling to protect the components in the shaft box and enable the shaft box to operate at a high rotation speed for a long time without excessive temperature.

An oil mist (grease) lubrication system is provided in the roller driven shaft box 5.16 and the roller driving shaft box 5.17 to realize lubrication of aerosol lubricating oil and grease lubrication. When it adopts the aerosol lubricating oil, the oil mist lubrication system comprises an oil mist lubrication device, a filtering device and corresponding pipelines. The oil mist lubrication device is connected to corresponding pipelines in the roller driven shaft box 5.16 and the roller driving shaft box 5.17, and the filtering device is provided at an oil delivery port of the oil mist lubrication device to prevent impurities from entering the roller driven shaft box 5.16 and the roller driving shaft box 5.17 to obstruct the pipelines. When grease lubrication is used, the grease lubrication system includes oil nozzles and corresponding pipelines, etc. The grease is fed through the nozzles into the corresponding pipes in the roller driven shaft box 5.16 and the roller driving shaft box 5.17.

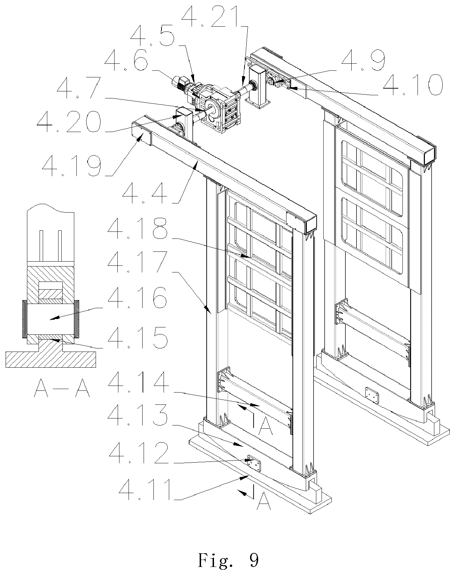

In one optional implementation manner, the structure of the swing system 4 is mounted in the peripheral frame 2, as shown in FIG. 9.

In this implementation manner, the swing system 4 comprises a swing beam 4.4, a swing motor 4.5, a speed reducer 4.6, a swing transmission shaft 4.7, a crank 4.9, a linear sliding rail 4.10, a swing fixing base 4.11, a swing shaft end plate 4.12, a swing hinge base 4.13, a swing lower cross beam 4.14, a swing hinge bearing 4.15, a swing hinge shaft 4.16 and a swing stand column 4.17; a swing middle cross beam 4.18, a swing guide friction plate 4.19, a crank rotation shaft base 4.20, and a coupling 4.21.

Two swing fixing bases 4.11 are fixedly mounted on the apparatus pre-embedded mounting board 1.2 in parallel and at intervals, and serve to bear and support the swing system 4. A vertical plate is provided at a center above the swing fixing base 4.11. The swing hinge base 4.13 is a U-shaped structure with an opening facing downwards (the cross section of swing hinge base 4.13 is U-shaped, see from the right of fig.9). Fig. 9 also shows a cross sectional view taken from A-A line. The swing hinge base 4.13 is buckled on the vertical plate, the centers of the two are connected via the swing hinge shaft 4.16, two ends of the swing hinge shaft 4.16 are respectively mounted on a center of the swing hinge base 4.13 via the swing shaft end plate 4.12, and the swing hinge bearing 4.15 is sleeved on the swing hinge shaft 4.16, whereby the swing fixing base 4.11, the swing shaft end plate 4.12, the swing hinge base 4.13, the swing hinge bearing 4.15 and the swing hinge shaft 4.16 constitute a hinge mechanism; so that the swing hinge base 4.13 can swing and rotate relative to the center of the swing fixing base 4.11, and the swing hinge bearing 4.15 can reduce the friction force during swing.

The swing hinge base 4.13, the swing lower cross beam 4.14, the swing stand column 4.17, the swing middle cross beam 4.18 and the swing beam 4.4 constitute a swing frame. Two swing stand columns 4.17 are symmetrically mounted on the swing hinge base 4.13, and at a lower part of the swing stand column 4.17, two ends of the swing lower cross beam 4.14 are respectively fixed on a side wall of the swing stand column 4.17. A plurality of swing middle cross beams 4.18 are mounted on the upper part of the swing stand column 4.17 at intervals. The fixing portion of the swing beam 4.4 is mounted on top of the swing stand column 4.17, and an extension of the swing beam 4.4 extends outside the swing stand column 4.17.

The swing motor 4.5 is fixed on the peripheral frame 2 in the middle of the extension of the two swing beams 4.4, the output shaft of the swing motor 4.5 is connected to the speed reducer 4.6, the output end of the speed reducer 4.6 is connected to the center of the swing transmission shaft 4.7, the two ends of the swing transmission shaft 4.7 are respectively connected to the crank 4.9 via a coupling 4.21, and crank rotation shaft bases 4.20 are symmetrically provided on two sides of the speed reducer 4.6 and fixed on the peripheral frame 2, and the swing transmission shaft 4.7 passes through the crank rotation shaft base 4.20; the crank rotation shaft base 4.20 provides rotational support for the swing transmission shaft 4.7. The crank 4.9 is connected to the linear sliding rail 4.10 on an inner side of an end of the extension portion of the swing beam 4.4 via a sliding block, and the crank 4.9 and the linear sliding rail 4.10 constitute a crank sliding block mechanism.

The wire cutting system 5 is mounted on an inner side of the swing rack, when the swing motor 4.5 drives the crank 4.9 to rotate via the swing transmission shaft 4.7, the sliding block reciprocates along the linear sliding rail 4.10, the crank 4.9 converts the received rotating power into linear power to drive the swing beam 4.4 to generate linear motion, and the swing beam 4.4 drives the swing frame to swing back and forth, thereby driving the wire cutting system 5 to swing.

Swing guide friction plates 4.19 are respectively mounted on the two outer ends of the two swing beams 4.4, and the swing guide friction plate 4.19 is connected to a guide limiting plate mounted on the inner side of the peripheral frame 2; and when the swing system 4 swings, the swing guide friction plate 4.19 cooperates with the guide limiting plate to achieve a side guide limiting function when the swing system 4 moves.

The swing system 4 of the present embodiment is of a non-closed structure, facilitating the loading and unloading of an ultra-large material 3.3.

In another optional implementation manner, a crane 9 (see FIG. 2) is mounted at a top central axis of the peripheral frame 2 for hoisting the material 3.3 and rollers 5.15, etc. to realize the loading and unloading of the material 3.3 and the adjustment of the position of the rollers 5.15 when cutting the material 3.3 with different specifications, solve the problem that the thickness of the processed sheet is single and the size replacement is very complicated, which is beneficial to expand the applicability of the wire cutting machine.

While the principles of the present invention have been described in detail in connection with preferred embodiments thereof, it will be appreciated by a person skilled in the art that the above-described embodiments are merely illustrative of exemplary implementations of the present invention, and are not intended to limit the scope of the present invention.The details of the embodiments are not to be construed as limiting the scope of the present invention, and any obvious variations thereof, such as equivalent alterations, simple substitutions, and the like, may be made without departing from the spirit and scope of the present invention.

## Claims

1. An ultra-large numerical control precision high-speed wire cutting machine, wherein the wire cutting machine comprises a basic pre-embedded assembly (1), a peripheral frame (2), a swing system (4) and a wire cutting system (5);
the peripheral frame (2) is mounted on the basic pre-embedded assembly (1);
the swing system (4) comprises a swing rack, a swing beam (4.4), a swing motor (4.5), a swing transmission shaft (4.7), a crank (4.9) and a linear sliding rail (4.10); wherein, in the peripheral frame (2), the swing rack is mounted on the basic pre-embedded assembly (1) via a swing base, the swing base has a hinge shaft therein, and the swing rack swings relative to the basic pre-embedded assembly (1) via the hinge shaft; the swing motor (4.5) is mounted on the peripheral frame (2) outside one end of the swing rack, and an output shaft of the swing motor (4.5) is connected to one end of the crank (4.9) via the swing transmission shaft (4.7); the swing beam (4.4) is mounted at one end of top part of the swing frame; the linear sliding rail (4.10) is mounted inside the swing beam (4.4); the other end of the crank (4.9) is slidably connected to the linear sliding rail (4.10) via a sliding block; the wire cutting system (5) is mounted on the swing rack; the swing motor (4.5) drives the crank (4.9) to rotate via the swing transmission shaft (4.7), the sliding block reciprocates along the linear sliding rail (4.10), the swing rack swings as a whole via the linear sliding rail (4.10), and the wire cutting system (5) swings together with the swing rack.

2. The ultra-large numerical control precision high-speed wire cutting machine according to claim 1, wherein the swing rack is an inner rack (4.3) of a frame structure; the swing base comprises swing lower bases (4.1) and first support bases (4.2); in the peripheral frame (2), the two swing lower bases (4.1) are symmetrically fixed on the basic pre-embedded assembly (1); the first support bases (4.2) are symmetrically mounted on two sides of the middle of the bottom of the inner rack (4.3); center of the first support base (4.2) is connected to the swing lower base (4.1) via the hinge shaft, and the swing frame can swing relative to the swing lower base (4.1) via the hinge shaft.

3. The ultra-large numerical control precision high-speed wire cutting machine according to claim 2, wherein the swing beam (4.4) comprises a fixing portion and an extension portion; the swing beam (4.4) is mounted on the top of one side of the inner rack (4.3) via the fixing portion, and the extension portion extends to the outside of the inner rack (4.3); and the linear sliding rail (4.10) is mounted inside the extension portion.

4. The ultra-large numerical control precision high-speed wire cutting machine according to claim 1, wherein the swing system (4) further comprises a speed reducer (4.6); an output shaft of the swing motor (4.5) is connected to the speed reducer (4.6), and an output end of the speed reducer (4.6) is connected to the crank (4.9) via the swing transmission shaft (4.7).

5. The ultra-large numerical control precision high-speed wire cutting machine according to claim 1, wherein the swing base comprises swing fixing bases (4.11), a swing hinge bearing (4.15) and a swing hinge shaft (4.16); the swing rack comprises two groups of swing frames, and the swing beam (4.4) is fixed on the top of the swing frames;
in the peripheral frame (2), the two swing fixing bases (4.11) are fixed on the basic pre-embedded assembly (1) in parallel with an interval therebetween, and a vertical plate is provided at a center part above the swing fixing bases (4.11); a bottom end of the swing frame is buckled on the vertical plate and is connected with the vertical plate via the swing hinge shaft (4.16), and the swing hinge bearing (4.15) is sleeved on the swing hinge shaft (4.16).

6. The ultra-large numerical control precision high-speed wire cutting machine according to claim 5, wherein the swing motor (4.5) is fixed on the peripheral frame (2) in the middle of the extension portion of two swing beams (4.4); the output shaft of the swing motor (4.5) is connected to the speed reducer (4.6), the output end of the speed reducer (4.6) is connected to the center of the swing transmission shaft (4.7), and two ends of the swing transmission shaft (4.7) are respectively connected to the crank (4.9) via a coupling (4.21).

7. The ultra-large numerical control precision high-speed wire cutting machine according to claim 5, wherein swing guide friction plates (4.19) are respectively mounted at two outer ends of the swing beam (4.4); and the swing guide friction plates (4.19) are connected to a guide limiting plate mounted inside the peripheral frame (2).

8. The ultra-large numerical control precision high-speed wire cutting machine according to claim 1, wherein the wire cutting machine further comprises a lifting platform system (3); the lifting platform system (3) is located inside the peripheral frame (2) and used for lifting material (3.3); the lifting platform system (3) comprises a lifting bracket, a lifting transmission shaft (3.4), a lifting screw base (3.5), a lifting driving geared motor (3.6), lifting screws (3.7) and a material platform (3.9);
two groups of the lifting brackets are symmetrically provided on the basic pre-embedded assembly (1) on two sides of the material platform (3.9); the two lifting screws (3.7) are symmetrically provided at ends of the lifting bracket on a side close to the material platform (3.9), a top end of the lifting screw (3.7) passes through the top of the lifting bracket and is placed in the lifting screw base (3.5) which is fixed at the top of the lifting bracket, and the bottom end of the lifting screw (3.7) is connected to the material platform (3.9); the lifting driving geared motor (3.6) is mounted on the peripheral frame (2) in the middle of the top of the lifting bracket, and the output end of the lifting driving geared motor (3.6) is connected to the middle of the lifting transmission shaft (3.4); the two ends of the lifting transmission shaft (3.4) are respectively placed in the lifting screw base (3.5) and are connected to the lifting screw (3.7) by means of turbine-worm transmission; the lifting driving geared motor (3.6) drives the lifting screw (3.7) to lift via the lifting transmission shaft (3.4), and the lifting screw (3.7) carries the material (3.3) to lift via the material platform (3.9).

9. The ultra-large numerical control precision high-speed wire cutting machine according to claim 8, wherein the basic pre-embedded assembly (1) comprises loading and unloading tracks (1.4) and a loading and unloading trolley (1.5); and two loading and unloading tracks (1.4) are mounted in parallel in the middle above the basic pre-embedded assembly (1), and the loading and unloading trolley (1.5) travels along the loading and unloading tracks (1.4) for loading and unloading the material (3.3) on the material platform (3.9).

10. The ultra-large numerical control precision high-speed wire cutting machine according to claim 1, wherein the wire cutting system (5) comprises a rewinding and unwinding mechanism and roller assemblies;
four groups of the roller assemblies, wherein two are respectively mounted at the left and right ends at the top of the inside part of the swing rack, the other two are respectively mounted at the left and right ends at the bottom of the inside part of the swing rack, and the mounting direction of the rollers (5.15) of the roller assembly is parallel to the swing transmission shaft (4.7);
the rewinding and unwinding mechanism is provided on a side of the swing rack opposite to the swing motor (4.5); the rewinding and unwinding mechanism comprises a rewinding and unwinding wheel (5.7), a rewinding and unwinding base (5.8) and a rewinding and unwinding motor (5.9); the rewinding and unwinding base (5.8) is mounted on the swing rack, the rewinding and unwinding motor (5.9) is mounted on one side of the rewinding and unwinding base (5.8), and an output shaft of the rewinding and unwinding motor (5.9) passes through the rewinding and unwinding base (5.8) and is connected to the rewinding and unwinding wheel (5.7); one end of the cutting wire (5.14) is successively wound on the rollers (5.15) of the four roller assemblies, and at least the cutting wires (5.14) at the upper and lower ends of the roller assemblies are parallel for cutting the material (3.3); the other end of the cutting wire (5.14) is wound on the rewinding and unwinding wheel (5.7), and the rewinding and unwinding wheel (5.7), driven by the rewinding and unwinding motor (5.9), winds and unwinds the cutting wire (5.14) and cuts the material (3.3).
